# EUROPEAN PATENT APPLICATION

(11) **EP 4 601 040 A1**
(43) Date of publication of application: **13.08.2025**
(21) Application number: 23924645.7
(22) Date of filing: 01.03.2023
(51) Int. Cl.: H01M 4/525, H01M 4/131

(54) **POSITIVE ELECTRODE ACTIVE MATERIAL, POSITIVE ELECTRODE SHEET, SECONDARY BATTERY, ELECTRIC DEVICE, AND PREPARATION METHOD**

(71) Applicant: Contemporary Amperex Technology (Hong Kong) Limited, Central (HK)
(72) Inventor: CHEN, Ning, Ningde, Fujian 352100 (CN); JIN, Haizu, Ningde, Fujian 352100 (CN); SHI, Dongyang, Ningde, Fujian 352100 (CN); DENG, Yaqian, Ningde, Fujian 352100 (CN); LIU, Zhi, Ningde, Fujian 352100 (CN); LV, Ruijing, Ningde, Fujian 352100 (CN); LI, Baiqing, Ningde, Fujian 352100 (CN)
(74) Representative: Jacob, Reuben Ellis
(86) International application number: PCT/CN2023/079055
(87) International publication number: WO 2024/178675

(57) **Abstract**

Provided in the present application are a positive electrode active material, a positive electrode sheet, a secondary battery, an electric device, and a preparation method. The positive electrode active material comprises polycrystalline particles which are denoted as first active particles and single-crystal or single-crystal-like particles which are denoted as second active particles, wherein the ratios of (Dv90-Dv10)/Dv50 of the first active particles and the second active particles are denoted as X1 and X2, respectively, and X1/X2 satisfies 0.2 ≤ X1/X2 ≤ 0.7.

## Description

### TECHNICAL FIELD

This application relates to the technical field of lithium-ion batteries, and in particular, to a positive electrode active material, a positive electrode plate, a secondary battery, a power consuming apparatus, and a preparation method.

### BACKGROUND

The descriptions here merely provide background information related to this application and do not necessarily constitute the prior art.

With the application and promotion of lithium-ion battery technology, the accelerated pace of life, and the development of various electronic products such as smartphones, tablet computers, smart wearables, electric tools, and electric vehicles, increasingly higher requirements are raised for the comprehensive performances of positive electrode active materials, to meet the requirements for comprehensive performances of batteries with respect to high energy density and long storage life. At present, the improvement on the long storage life of the battery often leads to the loss of energy density, causing it difficult to have both high energy density and long storage life.

Therefore, at present, there is an urgent need to develop lithium-ion batteries that meet the comprehensive requirements for high energy density and long storage life.

### SUMMARY

In view of the foregoing problems, this application provides a positive electrode active material, a positive electrode plate, a secondary battery, a power consuming apparatus, and a preparation method. By using the positive electrode active material, storage life can be improved while energy density is maintained to substantially have no loss.

According to a first aspect, this application provides a positive electrode active material, including first active particles and second active particles. The first active particles are polycrystalline particles in the positive electrode active material, and have a particle size parameter (Dᵥ90-Dᵥ10)/Dᵥ50 designated as X1. The second active particles are monocrystalline or quasi-monocrystalline particles in the positive electrode active material, and have a particle size parameter (Dᵥ90-Dᵥ10)/Dᵥ50 designated as X2.

X1/X2 satisfies 0.2 ≤ X1/X2 ≤ 0.7,
where Dᵥ90, Dᵥ50, and Dᵥ10 respectively represent corresponding particle sizes when a cumulative volume distribution percentage of combined multi-particles reaches 90%, 50%, and 10%.

In the positive electrode active material, a combination of polycrystalline active particles and monocrystalline or quasi-monocrystalline active particles with special particle size distribution characteristics is used. The ratio (designated as X1/X2) of (Dᵥ90-Dᵥ10)/Dᵥ50 of the polycrystalline active particles to (Dᵥ90-Dᵥ10)/Dᵥ50 of the monocrystalline or quasi-monocrystalline active particles is low, so that particle sizes of the active particles are reasonably combined, to significantly improve storage life of a battery while energy density is maintained to substantially have no loss. It is speculated in this application that reduced content of small-sized polycrystalline particles reduces an active surface area, reduces side reactions between an electrolyte solution and a positive electrode material during storage, and therefore, improves chemical stability of a battery core and prolongs the storage life of the battery.

In some embodiments, in a particle size distribution curve of the positive electrode active material, the first active particles and the second active particles correspond to two discrete separate peaks respectively.

By controlling the particle sizes and distribution of the polycrystalline particles and the monocrystalline or quasi-monocrystalline particles, the two types of particles can correspond to two discrete separate peaks respectively on the particle size distribution curve of the positive electrode active material. Dᵥ90, Dᵥ50, and Dᵥ10 of the two types of particles can be obtained through fitting and analysis of their respective particle size distribution peaks.

In some embodiments, X1/X2 satisfies 0.25 ≤ X1/X2 ≤ 0.55.

In some embodiments, the first active particles satisfy a condition that 0.3 ≤ X1 ≤ 1.0. Optionally, the first active particles satisfy a condition that 0.4 ≤ X1 ≤ 0.8.

In some embodiments, the second active particles satisfy a condition that 0.7 ≤ X2 ≤ 2.5. Optionally, the second active particles satisfy a condition that 0.7 ≤ X2 ≤ 2; and further optionally, the second active particles satisfy a condition that 0.8 ≤ X2 ≤ 1.6.

By further adjusting the value range of X1/X2, or by further adjusting the value of X1 for the polycrystalline active particles or selecting the value of X2 for the monocrystalline or quasi-monocrystalline active particles to control the value of X1/X2, the active surface areas of the particles of the two sizes can be better matched, so as to better meet the requirements for both high energy density and long storage life, and better improve the storage life of the battery while maintaining good energy density.

In some embodiments, a ratio R_{Dv50} of Dᵥ50 of the first active particles to Dᵥ50 of the second active particles satisfies 2 ≤ R_{Dv50} ≤ 4. Optionally, the ratio R_{Dv50} of Dᵥ50 of the first active particles to Dᵥ50 of the second active particles satisfies 2.3 ≤ R_{Dv50} ≤ 4.0.

In some embodiments, Dᵥ50 of the first active particles satisfies 7 µm ≤ Dᵥ50 ≤ 15 µm. Optionally, Dᵥ50 of the first active particles satisfies 7 µm ≤ Dᵥ50 ≤ 14 µm.

In some embodiments, Dᵥ50 of the second active particles satisfies 1 µm ≤ Dᵥ50 ≤ 6 µm. Further optionally, Dᵥ50 of the second active particles satisfies 2 µm ≤ Dᵥ50 ≤ 4 µm.

By separately adjusting the range of Dᵥ50 of the polycrystalline active particles and the monocrystalline or quasi-monocrystalline active particles in the positive electrode active material, or by a ratio of Dᵥ50 of the two materials, the active surface areas of different active particles can be coordinately controlled, thereby better reducing the side reactions between the electrolyte solution and the positive electrode material during storage, and therefore, better improving the chemical stability of the battery core, and further extending the storage life of the battery.

In some embodiments, a ratio R_{W} of a weight of the first active particles to a total weight of the first active particles and the second active particles satisfies 0.5 ≤ R_{W} ≤ 0.9. Optionally, the ratio R_{W} of the weight of the first active particles to the total weight of the first active particles and the second active particles satisfies 0.7 ≤ R_{W} ≤ 0.9.

By adjusting a weight proportion of the polycrystalline active particles in the positive electrode active particles to fall within a certain range, for example, by adjusting the ratio R_{W} of the weight of the first active particles to the total weight of the first active particles (where the first active particles are the polycrystalline active particles in the positive electrode active material) and the second active particles (where the second active particles are the monocrystalline or quasi-monocrystalline active particles in the positive electrode active material) to fall within a certain range, for example, 0.5 ≤ R_{W} ≤ 0.9, the active surface area is further reduced and the side reactions between the electrolyte solution and the positive electrode material during storage is further reduced, thereby improving the chemical stability of the battery core and prolonging the storage life of the battery.

In some embodiments, the first active particles and the second active particles are each independently an oxide material containing lithium elements and nickel elements.

Optionally, a number ratio R_{Ni/Li} of nickel elements to lithium elements in the first active particles and a number ratio R_{Ni/Li} of nickel elements to lithium elements in the second active particles are each independently greater than or equal to 0.65.

Further optionally, the number ratio R_{Ni/Li} of the nickel elements to the lithium elements in the first active particles and the number ratio R_{Ni/Li} of the nickel elements to the lithium elements in the second active particles each independently satisfy 0.8 ≤ R_{Ni/Li} ≤ 1.0.

In some embodiments, the first active particles and the second active particles are each independently a ternary material or a ternary material containing a doping and/or coating element.

Optionally, the first active particles and the second active particles are each independently an NCM ternary material, an NCA ternary material, an NCM ternary material containing a doping and/or coating element, or an NCA ternary material containing a doping and/or coating element.

Optionally, the first active particles and the second active particles each independently have a chemical composition with the following molar element ratio: Liₓ(NiₐCo_{b}M_{c}M'_{d}) O₂, where 0.9 ≤ x ≤ 1.2, 0.8 ≤ a < 1, 0 < b < 1, 0 < c < 1, a + b + c + d = 1, M includes at least one of Mn and Al, and M' includes one or more of Na, K, Ca, Ba, Sb, Ti, Zr, W, Sr, Nb, Mo, Si, Mg, B, Cr, and Ta.

As the nickel content in the positive electrode active material increases, deterioration of the storage performance of the battery caused by the small-sized particles in the polycrystalline active particles (in other words, the small-sized polycrystalline active particles) becomes more significant, and it is more difficult to have both high energy density and long storage life. By using the positive electrode active material provided in this application, the storage life of the battery can be significantly improved without substantial loss of the energy density in a high-nickel system.

In some embodiments, the number ratio R_{Ni/Li} of nickel-lithium elements in the first active particles is less than the number ratio R_{Ni/Li} of nickel-lithium elements in the second active particles.

Optionally, a difference ΔR_{Ni/Li} between the number ratios R_{Ni/Li} of the nickel elements to the lithium elements in the second active particles and in the first active particles satisfies 0 < ΔR_{Ni/Li} ≤ 0.05.

Further optionally, 0.01 < ΔR_{Ni/Li} ≤ 0.05.

By adjusting relative magnitudes of the number ratios R_{Ni/Li} of nickel-lithium elements in the polycrystalline particles and in the monocrystalline or quasi-monocrystalline particles, R_{Ni/Li} of the polycrystalline particles is lower than R_{Ni/Li} of the monocrystalline or quasi-monocrystalline particles. This can not only provide a relatively high extractable capacity of the positive electrode active material, but also improve thermal stability of the positive electrode active material and improve high-temperature storage performance of the battery.

According to a second aspect, this application provides a positive electrode plate, including a positive electrode active material layer. The positive electrode active material layer includes the positive electrode active material according to the first aspect of this application. In this case, the use of the positive electrode plate can provide the secondary battery with excellent storage performance while maintaining good energy density.

In some embodiments, compaction density of the positive electrode plate ranges from 3.2 g/cm³ to 3.8 g/cm³; and optionally, the compaction density of the positive electrode plate ranges from 3.4 g/cm³ to 3.7 g/cm³. When the compaction density of the positive electrode plate is in the foregoing range, higher energy density can be obtained while both the energy density and the storage performance of the battery are ensured.

According to a third aspect, this application provides a secondary battery, including the positive electrode plate according to the second aspect of this application, and further including a negative electrode plate and a separator, where the separator is disposed between the positive electrode plate and the negative electrode plate.

In the positive electrode plate of the secondary battery, the polycrystalline active particles and the monocrystalline or quasi-monocrystalline active particles have unique particle size distribution characteristics and excellent storage performance, and can also maintain good energy density at the same time.

According to a fourth aspect, this application provides a power consuming apparatus, including at least one of the positive electrode plate according to the second aspect of this application and the secondary battery according to the third aspect of this application.

According to a fifth aspect, this application provides a method for preparing a positive electrode active material, including the following steps:
preparing first active particles and second active particles separately; and
mixing the first active particles and the second active particles to prepare the positive electrode active material according to the first aspect of this application.

The first active particles are prepared by using a method including the following steps: sintering a precursor material having a specified stoichiometric ratio of elements at a temperature of 600°C to 900°C for 8 h to 15 h.

The second active particles are prepared by using a method including the following steps: sintering a precursor material having a specified stoichiometric ratio of elements at a temperature of 700°C to 1000°C for 8 h to 15 h.

By controlling sintering parameters of the positive electrode active material, the unique particle size distribution characteristics of the polycrystalline active particles and the monocrystalline or quasi-monocrystalline active particles can be adjusted.

Details of one or more embodiments according to this application are provided in the accompanying drawings and descriptions below. Other features, objects, and advantages of this application will become apparent from the specification, the drawings, and the claims.

### BRIEF DESCRIPTION OF THE DRAWINGS

To better describe and illustrate embodiments or examples of those applications disclosed herein, refer to one or more drawings. However, the additional details or examples used to describe the drawings should not be regarded as limitations to the scopes of any one of the applications disclosed, the embodiments or examples described for the present, and the most modes of the embodiments understood for the present. In addition, in all the accompanying drawings, same parts are indicated by the same reference numerals. In the accompanying drawings:
FIG. 1 shows a particle size distribution curve of a positive electrode active material according to an embodiment of this application;
FIG. 2 is a schematic view of a secondary battery according to an embodiment of this application;
FIG. 3 is an exploded view of a secondary battery according to an embodiment of this application as shown in FIG. 2; and
FIG. 4 is a schematic view of a power consuming apparatus using a secondary battery according to an embodiment of this application as a power source.

### Reference numerals:

5. secondary battery; 51. housing; 52, electrode assembly; 53. cover plate; 6. power consuming apparatus.

### DETAILED DESCRIPTION

Some embodiments of a positive electrode active material, a positive electrode plate, a secondary battery, a power consuming apparatus, and a preparation method of this application are disclosed below appropriately with reference to detailed descriptions of the accompanying drawings. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by a person skilled in the art. In addition, the accompanying drawings and the following descriptions are provided for a person skilled in the art to fully understand this application, and are not intended to limit the subject matter described in the claims.

A numerical "range" disclosed in this application is defined in a form of a lower limit and an upper limit. A given range is defined by selecting a lower limit and an upper limit, and the selected lower limit and upper limit define boundaries of a particular range. A range defined in this manner may be inclusive or exclusive of end values, and any end value may be independently inclusive or exclusive and may be arbitrarily combined, that is, any lower limit may be combined with any upper limit to form a range. For example, if a range of 60 to 120 and a range of 80 to 110 are listed for a particular parameter, it is understood that a range of 60 to 110 and a range of 80 to 120 are also contemplated. In addition, if minimum range values of 1 and 2 are listed and maximum range values of 3, 4 ,and 5 are listed, the following ranges are all contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a to b, where both a and b are real numbers. For example, a numerical range "0 to 5" means that all real numbers between "0 to 5" are listed herein, and "0 to 5" is merely an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12. For example, when it is stated that a parameter is an integer selected from "2 to 10", it is equivalent to listing integers 2, 3, 4, 5, 6, 7, 8, 9, and 10.

Unless otherwise specified, all embodiments and optional embodiments of this application may be combined with each other to form new technical solutions.

Unless otherwise specified, all steps of this application may be performed sequentially or randomly, and preferably sequentially. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may step (c), step (a), and step (b).

Unless otherwise specified, the terms such as "have", "include", "contain", "comprise", and their variants mentioned in this application may be open-ended or closed-ended. For example, the terms such as "include" and "comprise" may mean that other members or sequential characteristics not listed may be further included or comprised, or only the listed members or sequential characteristics may be included or comprised. Members include, for example, materials or components, structures, elements, instruments, and the like; and non-limiting examples of the sequential characteristics include an action, and a condition, a timing, and a state of the action, and the like.

Unless otherwise specified, the term "or" is inclusive in this application. For example, a phrase "A or B" means "A, B, or both A and B". Further, the condition "A or B" is satisfied when any one of the following conditions is satisfied: A is true (or present) and B is false (or absent); A is false (or absent) and B is true (or present); or both A and B are true (or present).

In this application, unless otherwise specified, A (such as B) indicates that B is a non-limiting example of A. It may be understood as that A is not limited to B.

In this application, unless otherwise stated, a feature or scheme corresponding to "and/or" includes any one of two or more relevant listed items, and also includes any and all combinations of the relevant listed items. The any and all combinations include combinations of any two relevant listed items, any more relevant listed items, or all relevant listed items. For example, "A and/or B" means the group consisting of A, B, and "a combination of A and B". "Including A and/or B" may mean "including A, including B, and including A and B", and may also mean "including A, including B, or including A and B", which can be properly understood according to the statement.

The terms "plurality", "multiple", and the like in this application mean greater than or equal to 2 in number, unless otherwise limited. For example, "one or more" means one or more than or equal to two.

Herein, "preferred" and "better" are merely intended to describe implementations or embodiments with better effects, and should not be understood as a limitation on the protection scope of this application. If there are multiple "preferred" in one technical solution, unless otherwise specified and there are no contradictions or mutual constraints, each "preferred" is independent.

In this application, "further", "still further", and "particularly" are used for descriptive purposes and indicate differences in content, but should not be understood as limitations on the protection scope of this application.

In this application, in the "first aspect", "second aspect", "third aspect", "fourth aspect", and the like, the terms "first", "second", "third", "fourth", and the like are only used for descriptive purposes, and cannot be understood as indicating or implying relative importance or quantity, nor implicitly indicating the importance or quantity of the indicated technical features. Moreover, the "first", "second", "third", "fourth", and the like are merely used for the purpose of non-exhaustive description, and should not be understood as constituting a closed limitation on the quantity.

In this application, with respect to the unit of a data range, if only the right end point is followed by the unit, it means that the units of the left end point and the right end point are the same. For example, 3 to 5 h or 3-5 h both indicate that the units of the left end point "3" and the right end point "5" are both h (hour).

The weight of relevant components mentioned in the specification of the embodiments of this application may not only refer to the content of each component, but also represent the weight ratio relationship between the components. Therefore, the contents of relevant components scaled up or down according to the specification of the embodiments of this application are embraced within the scope disclosed in the specification of the embodiments of this application. Further, the weight described in the specification of the embodiments of this application may be a mass unit known in the chemical domain, such as µg, mg, g, kg, and the like.

With the application and promotion of lithium-ion battery technology, increasingly higher requirements are raised for the comprehensive performances of positive electrode active materials, to meet the requirements for comprehensive performances of batteries with respect to high energy density and long storage life. For the positive electrode plate in the conventional technology, to obtain a relatively high compaction density, the particle size distribution of active particles is usually wide. For example, (Dᵥ90-Dᵥ10)/Dᵥ50 of the positive electrode active material is often 1.2 or more (≥ 1.2). When the positive electrode active material has such a wide particle size distribution, it often includes a large number of small-sized polycrystalline particles. However, the small-sized particles in the polycrystalline particles will deteriorate the storage performance of the battery. If (Dᵥ90-Dᵥ10)/Dᵥ50 of the positive electrode active material is reduced simply, the loss of the compaction density is caused. Therefore, it is difficult to achieve both improvement of long storage life and low loss of energy density of the battery.

In view of the foregoing problems, according to a first aspect, this application provides a positive electrode active material, including first active particles and second active particles. The first active particles are polycrystalline particles in the positive electrode active material, and have a particle size parameter (Dᵥ90-Dᵥ10)/Dᵥ50 designated as X1. The second active particles are monocrystalline or quasi-monocrystalline particles in the positive electrode active material, and have a particle size parameter (Dᵥ90-Dᵥ10)/Dᵥ50 designated as X2.

X1/X2 satisfies 0.2 ≤ X1/X2 ≤ 0.7,
where Dᵥ90, Dᵥ50, and Dᵥ10 respectively represent corresponding particle sizes when a cumulative volume distribution percentage of combined multi-particles reaches 90%, 50%, and 10%.

The positive electrode active material provided in this application includes the polycrystalline particles designated as the first active particles and the monocrystalline or quasi-monocrystalline particles designated as the second active particles. (Dᵥ90-Dᵥ10)/Dᵥ50 of the first active particles and the second active particles are respectively designated as X1 and X2, where X1/X2 satisfies 0.2 ≤ X1/X2 ≤ 0.7.

In this application, unless otherwise specified, the electrode plate may be a positive electrode plate or a negative electrode plate, and the "active material" in the electrode plate refers to a material capable of reversibly intercalating and deintercalating active ions. Unless otherwise specified, a "negative electrode active material" refers to a material used with the negative electrode plate that can reversibly intercalate and deintercalate active ions; and the "positive electrode active material" refers to a material used with the positive electrode plate that can reversibly deintercalate and intercalate active ions. When the secondary battery is charged, active ions are deintercalated from the positive electrode and intercalated into the negative electrode through the electrolyte. When the secondary battery is discharged, active ions are deintercalated from the negative electrode and intercalated into the positive electrode. The active ions are not particularly limited and may be lithium ions. In this case, the secondary battery is correspondingly a lithium-ion secondary battery.

In this application, the "active material" and "active substance" have the same meaning and can be used interchangeably; the "positive electrode active material" and "positive electrode active substance" have the same meaning and can be used interchangeably; and the "negative electrode active material" and "negative electrode active substance" have the same meaning and can be used interchangeably.

In this application, unless otherwise specified, the "active material layer" includes a positive electrode active material layer of the positive electrode plate and a negative electrode active material layer of the negative electrode plate, and may refer to the positive electrode active material layer or the negative electrode active material layer according to a specific scenario. It may be understood that the positive electrode active material layer contains a positive electrode active material, and the negative electrode active material layer contains a negative electrode active material.

In this application, the "polycrystalline" particle, also known as the secondary particle, refers to an agglomerated particle formed by the aggregation of two or more primary particles. In this application, the particle size of the primary particles constituting the polycrystalline particles is generally controlled between 100 nm and 800 nm. If the particle size of the primary particles is small, side reactions with the electrolyte solution may be aggravated. If the particle size of the primary particles is large, the dynamic performance of the battery tends to deteriorate.

In this application, the "monocrystalline" particle, also known as the primary particle, refers to a monocrystalline grain. The micromorphology of the monocrystalline particle is substantially non-agglomerated and dispersed particles. The monocrystalline particle may be a particle with an irregular shape. A single particle with a size greater than 1 µm and no obvious agglomeration is usually determined as a monocrystalline particle.

In this application, "primary particles" and "secondary particles" are terms well known in the art.

In this application, the "quasi-monocrystalline" generally refers to particles that have primary particles with a certain agglomeration, but have similar size and properties to those of the monocrystalline particle.

In this application, the "size" or "particle size" of the polycrystalline particles and monocrystalline or quasi-monocrystalline particles refers to Dᵥ50, unless otherwise specified.

The polycrystalline particles and monocrystalline or quasi-monocrystalline particles can be easily distinguished by taking SEM images using a scanning electron microscope.

In the context of this application, a cumulative volume distribution particle size DᵥN (where N represents any value selected from 0 to 100) may be used to characterize the particle size of the material, and refers to the corresponding particle size when the cumulative volume distribution percentage of the material reaches N%, where the volume percentage of particles with a particle size of less than or equal to DᵥN is N%. DᵥN can be obtained from a cumulative volume distribution curve of the particle size of the material. Unless otherwise specified, the cumulative volume distribution curve starts accumulation from zero from the small particle size side. With Dᵥ90, Dᵥ50, and Dᵥ10 as examples, Dᵥ90 refers to a corresponding particle size when the cumulative volume distribution percentage of the material reaches 90%, Dᵥ50 refers to a corresponding particle size when the cumulative volume distribution percentage of the material reaches 50%, and Dᵥ10 refers to a corresponding particle size when the cumulative volume distribution percentage of the material reaches 10%. For example, Dᵥ50 indicates that a particle size of particles accounting for 50% by volume of the material is less than or equal to Dᵥ50 and a particle size of particles accounting for 50% by volume of the material is greater than Dᵥ50. For example, Dᵥ90 indicates that a particle size of particles accounting for 90% by volume of the material is less than or equal to Dᵥ90 and a particle size of particles accounting for 10% by volume of the material is greater than Dᵥ90. For example, Dᵥ10 indicates that a particle size of particles accounting for 10% by volume of the material is less than or equal to Dᵥ10 and a particle size of particles accounting for 90% by volume of the material is greater than Dᵥ10. The meanings of Dᵥ90, Dᵥ50, and Dᵥ10 of the positive electrode active material may be understood by those skilled in the art, and may be measured by instruments and methods known in the art. For example, they can be conveniently measured with reference to GB/T 19077-2016 Particle Size Distribution - Laser Diffraction Methods by using, for example, Mastersizer 2000E laser particle size analyzer from Malvern Instruments Co., Ltd., and LS-909 laser particle size analyzer (Omec Instruments).

For a mixed system including multiple particles, the particle size parameter (Dᵥ90-Dᵥ10)/Dᵥ50 can reflect distribution characteristics of the particles, and therefore, is also a particle size distribution parameter. Generally, as a value of (Dᵥ90-Dᵥ10)/Dᵥ50 increases, the particle size distribution becomes wider; and conversely, as the value decreases, the particle size distribution becomes narrower.

The small-sized particles in the polycrystalline particles will deteriorate the storage performance of the battery. This may be due to the fact that the small-sized polycrystalline particles have a large specific surface area, and are tend to break, resulting in the dissolution out of the transition metal from the positive electrode material, and therefore, deteriorating the storage performance. However, if (Dᵥ90-Dᵥ10)/Dᵥ50 of the positive electrode active material is reduced simply, the loss of the compaction density is caused.

In the positive electrode active material provided in this application, a combination of polycrystalline active particles and monocrystalline or quasi-monocrystalline active particles with special particle size distribution characteristics is used. A ratio (designated as X1/X2) of (Dᵥ90-Dᵥ10)/Dᵥ50 of the polycrystalline active particles to (Dᵥ90-Dᵥ10)/Dᵥ50 of the monocrystalline or quasi-monocrystalline active particles is low, so that the particle sizes of the active particles are reasonably combined, to significantly improve the storage life of the battery while the energy density is maintained to substantially have no loss. It is speculated in this application that reduced content of small-sized polycrystalline particles reduces an active surface area, reduces side reactions between an electrolyte solution and the positive electrode material during storage, and therefore, improves chemical stability of a battery core and prolongs the storage life of the battery.

In the positive electrode active material provided in this application, by adjusting the value of X1/X2, the particle sizes and particle size distributions of the polycrystalline active particles and the monocrystalline or quasi-monocrystalline active particles are finely matched, so that the balance between the content of the small-sized polycrystalline active particles and the compaction density of the positive electrode plate can be well coordinated, to well meet the requirements for both the storage performance and energy density of the battery.

In some embodiments, in a particle size distribution curve of the positive electrode active material, the first active particles and the second active particles correspond to two discrete separate peaks respectively.

In this application, unless otherwise specified, the particle size distribution curve may be measured by instruments known in the art. For example, the particle size distribution curve may be obtained through tests by using a laser particle size analyzer. Further, for example, the Mastersizer 2000E laser particle size analyzer from Malvern Instruments Co., Ltd., and LS-909 laser particle size analyzer (Omec Instruments) may be used.

By controlling the particle sizes and distributions of the polycrystalline particles and the monocrystalline or quasi-monocrystalline particles, the two types of particles can correspond to two discrete separate peaks respectively on the particle size distribution curve of the positive electrode active material. Dᵥ90, Dᵥ50, and Dᵥ10 of the two types of particles can be obtained through fitting and analysis of their respective particle size distribution peaks.

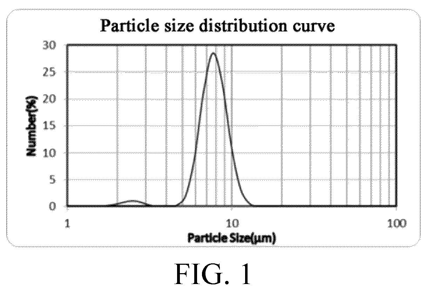

The particle size distribution curve shown in FIG. 1 is a particle size distribution curve obtained by testing the positive electrode active material according to an embodiment of this application with a laser particle size analyzer. The particle size distribution curve has a bimodal distribution, and has two separate peaks, which correspond to the first active particles (large particles) and the second active particles (small particles) in this application respectively.

In the particle size distribution curve, the two peaks corresponding to the first active particles and the second active particles are discrete, which means that the particle size ranges of the two active particles have no overlap. The two types of particles can be easily screened out separately from a mixture of the two types of particles, and then relevant tests are performed on the two active particles of different sizes independently, such as, but not limited to, a composition test and a specific surface area test.

In some embodiments, there are only two peaks in the particle size distribution curve of the positive electrode active material, and the two peaks are discrete separate peaks. In this case, the two peaks correspond to particle size distributions of the first active particles and the second active particles respectively.

In some embodiments, X1/X2 satisfies 0.2 ≤ X1/X2 ≤ 0.7. X1/X2 may be selected from any one of the following values: 0.2, 0.25, 0.3, 0.35, 0.4, 0.45, 0.5, 0.55, 0.6, 0.65, or 0.7, and may alternatively be selected from an interval formed by any two of the foregoing values. A non-limiting example may include: 0.25 ≤ X1/X2 ≤ 0.55.

In some embodiments, the first active particles satisfy a condition that 0.3 ≤ X1 ≤ 1.0. X1 of the first active particles may be selected from any one of the following values: 0.3, 0.35, 0.4, 0.45, 0.5, 0.55, 0.6, 0.65, 0.7, 0.75, 0.8, 0.85, 0.9, 0.95, or 1, and may alternatively be selected from an interval formed by any two of the foregoing values. A non-limiting example may include: 0.4 ≤ X1 ≤ 0.8.

In some embodiments, the second active particles satisfy a condition that 0.7 ≤ X2 ≤ 2.5. X2 of the second active particles may be selected from any one of the following values: 0.7, 0.8, 0.9, 1.0, 1.1, 1.2, 1.25, 1.3, 1.35, 1.4, 1.45, 1.5, 1.55, 1.6, 1.65, 1.7, 1.75, 1.8, 1.85, 1.9, 1.95, 2 (for example, 2.0), 2.1, 2.2, 2.3, 2.4, or 2.45, and may alternatively be selected from an interval formed by any two of the foregoing values. Non-limiting examples may include: 1.5 ≤ X2 ≤ 2.5, 0.7 ≤ X2 ≤ 2, 0.7 ≤ X2 ≤ 1.6, 0.8 ≤ X2 ≤ 1.6, 0.7 ≤ X2 ≤ 1.5, and 0.8 ≤ X2 ≤ 1.5.

By further adjusting the value range of X1/X2, or by further adjusting the value of X1 for polycrystalline active particles or selecting the value of X2 for monocrystalline or quasi-monocrystalline active particles to control the value of X1/X2, the active surface areas of particles of the two sizes can be better matched, so as to better meet the requirements for both high energy density and long storage life, and better improve the storage life of the battery while maintaining a good energy density.

In some embodiments, a ratio R_{Dv50} of Dᵥ50 of the first active particles to Dᵥ50 of the second active particles satisfies 2 ≤ R_{Dv50} ≤ 4. The ratio R_{Dv50} of Dᵥ50 of the first active particles to Dᵥ50 of the second active particles may be selected from any one of the following values: 2, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, or 4 (for example, 4.0), or may be selected from an interval formed by any two of the foregoing values. A non-limiting example may include: 2.3 ≤ R_{Dv50} ≤ 4.0.

In some embodiments, Dv50 of the first active particles satisfies 7 µm ≤ Dᵥ50 ≤ 15 µm. Dᵥ50 of the first active particles may be selected from any one of the following sizes: 7 µm, 8 µm, 9 µm, 10 µm, 11 µm, 12 µm, 13 µm, 14 µm, or 15 µm, and may alternatively be selected from an interval formed by any two of the foregoing sizes. A non-limiting example may include: 7 µm ≤ Dᵥ50 ≤ 14 µm.

In some embodiments, Dv50 of the second active particles satisfies 1 µm ≤ Dᵥ50 ≤ 6 µm. Dᵥ50 of the second active particles may be selected from any one of the following sizes: 1 µm, 1.5 µm, 2 µm, 2.5 µm, 3 µm, 3.5 µm, 4 µm, 4.5 µm, 5 µm, 5.5 µm, or 6 µm, and may alternatively be selected from an interval formed by any two of the foregoing sizes. Non-limiting examples may include: 2 µm ≤ Dᵥ50 ≤ 6 µm, 1 µm ≤ Dᵥ50 ≤ 4 µm, 2 µm ≤ Dᵥ50 ≤ 4 µm, and 3.5 µm ≤ Dᵥ50 ≤ 6 µm.

In some embodiments, the first active particles have a specific surface area of 0.35 m²/g to 0.65 m²/g. The specific surface area of the first active particles may be selected from any one of the following values: 0.35 m²/g, 0.4 m²/g, 0.45 m²/g, 0.5 m²/g, 0.55 m²/g, 0.6 m²/g, or 0.65 m²/g, and may alternatively be selected from an interval formed by any two of the foregoing values. A non-limiting example may include: 0.35 m²/g to 0.55 m²/g.

In some embodiments, the second active particles have a specific surface area of 0.70 m²/g to 0.90 m²/g. The specific surface area of the second active particles may be selected from any one of the following values: 0.7 m²/g, 0.72 m²/g, 0.74 m²/g, 0.75 m²/g, 0.76 m²/g, 0.78 m²/g, 0.8 m²/g, 0.82 m²/g, 0.84 m²/g, 0.85 m²/g, 0.86 m²/g, 0.88 m²/g, or 0.9 m²/g, or may be selected from an interval formed by any two of the foregoing values. A non-limiting example may include: 0.70 m²/g to 0.85 m²/g.

In this application, unless otherwise specified, the specific surface area of the particles refers to the ratio of the surface area to the weight of the particles, which can be measured by instruments and methods known in the art. For example, it can be measured by using the specific surface area analysis and test method by nitrogen adsorption.

By separately adjusting the range of Dᵥ50 of the polycrystalline active particles and the monocrystalline or quasi-monocrystalline active particles in the positive electrode active material, or by a ratio of Dᵥ50 of the two materials, the active surface areas of different active particles can be coordinately controlled, thereby better reducing the side reactions between the electrolyte solution and the positive electrode material during storage, and therefore, better improving the chemical stability of the battery core, and further extending the storage life of the battery.

In this application, the specific surface area (BET) of the positive electrode active material may be measured by using the following method. The specific surface area analysis test method by nitrogen adsorption is used, and the BET (Brunauer Emmett Teller) method is used for calculation. The specific surface area analysis test by nitrogen adsorption may be performed by Tri Star II type specific surface and pore size distribution analyzer from Micromeritics, USA, and for the test steps, refer to GB/T 19587-2004. Test sample: a prepared positive electrode active material or a positive electrode active material obtained through sampling from the positive electrode active material layer of the positive electrode plate. The test and analysis method is as follows. The test sample is dried in a vacuum drying oven at 200°C for 2 h. Then, argon is used as an adsorption gas, and an adsorption and desorption curve is plotted by the specific surface and pore size distribution analyzer under a relative pressure P/P₀ of 0 to 0.99, where P₀ is a saturated vapor pressure. The specific surface area of the positive electrode active material is calculated by using the BET method.

In some embodiments, a ratio R_{W} of a weight of the first active particles to a total weight of the first active particles and the second active particles satisfies 0.5 ≤ R_{W} ≤ 0.9. The ratio R_{W} of the weight of the first active particles to the total weight of the first active particles and the second active particles may be selected from any one of the following values: 0.5, 0.52, 0.54, 0.55, 0.56, 0.58, 0.6, 0.62, 0.63, 0.64, 0.65, 0.66, 0.68, 0.69, 0.7, 0.72, 0.74, 0.75, 0.76, 0.78, 0.8, 0.82, 0.84, 0.85, 0.86, 0.88, or 0.9, and may alternatively be selected from an interval formed by any two of the foregoing values. A non-limiting example may include: 0.7 ≤ R_{W} ≤ 0.9.

By adjusting a weight proportion of the polycrystalline active particles in the positive electrode active particles to fall within a certain range, for example, by adjusting the ratio R_{W} of the weight of the first active particles to the total weight of the first active particles (the polycrystalline active particles in the positive electrode active material) and the second active particles (the monocrystalline or quasi-monocrystalline active particles in the positive electrode active material) to fall within a certain range, for example, 0.5 ≤ R_{W} ≤0.9, the active surface area is further reduced and the side reactions between the electrolyte solution and the positive electrode material during storage is further reduced, thereby improving the chemical stability of the battery core and prolonging the storage life of the battery.

In addition, as the nickel content in the positive electrode active material increases, the deterioration of the storage performance of the battery caused by the small-sized particles in the polycrystalline active particles (in other words, the small-sized polycrystalline active particles) becomes more significant, and it is more difficult to have both high energy density and long storage life. By using the positive electrode active material provided in this application, the storage life of the battery can be significantly improved without substantial loss of the energy density in a high-nickel battery.

In the application, "high-nickel" is a collective term used by those skilled in the art for a class of materials with a relatively high molar proportion of nickel element in lithium transition metal oxides. Generally, based on 1 mol of the lithium transition metal oxide, the molar proportion of nickel is 0.8 or more. The NCM811 ternary positive electrode material is used as an example, in which the molar ratio of nickel, cobalt, and manganese is 80:10:10. Increasing the nickel content in the positive electrode active material can increase the energy density and improve the battery capacity.

In the lithium-ion battery system of this application, for the positive electrode active material and the positive electrode plate, the nickel content can be characterized by an element number ratio of nickel elements to lithium elements. The element number ratio may be referred to as a nickel-lithium molar ratio, and designated as R_{Ni/Li}. A value of the ratio is equal to the molar ratio of nickel to lithium. In this application, R_{Ni/Li} at each occurrence may be independently greater than or equal to 0.65, further may be independently greater than or equal to 0.7, and still further may be independently greater than or equal to 0.8. In some embodiments of this application, the nickel-lithium molar ratio R_{Ni/Li} may alternatively be selected from any one of the following values or an interval formed by any two of the following values: 0.65, 0.7, 0.75, 0.8, 0.82, 0.85, 0.9, 0.95, 1, and the like. In some embodiments of this application, the nickel-lithium molar ratio R_{Ni/Li} may alternatively be selected from any of the following numerical ranges (any numerical end point herein may be independently included or excluded): 0.65 to 1.0, 0.7 to 1.0, 0.8 to 1.0, 0.8 to 0.95, and the like.

In some embodiments, the first active particles and the second active particles are each independently an oxide material containing lithium elements and nickel elements.

In this application, the "oxide containing lithium elements and nickel elements" may be referred to as a lithium-nickel transition metal oxide. A non-limiting example of the lithium-nickel transition metal oxide may include, but is not limited to, one or more of lithium-nickel oxide, lithium-nickel-cobalt oxide, lithium-nickel-manganese oxide, lithium-nickel-cobalt-manganese oxide, lithium-nickel-cobalt-aluminum oxide, and modified compounds thereof. A non-limiting example of the lithium-nickel oxide may include LiNiO₂ or the like. A non-limiting example of the lithium-nickel-cobalt-manganese oxide may include LiNi_{0.8}Co_{0.1}Mn_{0.1}O₂ (or referred to as NCM₈₁₁ for short) and the like. A non-limiting example of the lithium-nickel-cobalt-aluminum oxide may include LiNi_{0.85}Co_{0.15}Al_{0.05}O₂ or the like.

In some embodiments, the number ratio R_{Ni/Li} of nickel elements to lithium elements in the first active particles and the number ratio R_{Ni/Li} of nickel elements to lithium elements in the second active particles each independently conform to the definition in any of the foregoing embodiments, for example, are greater than or equal to 0.65. R_{Ni/Li} of the first active particles and the second active particles are each independently selected from any one of the following values: 0.65, 0.66, 2/3 (that is, two-thirds), 0.67, 0.68, 0.7, 0.71, 0.75, 0.8, 0.85, 0.88, 0.89, 8/9 (that is, eight-ninths), 0.9, 0.91, 0.92, 0.93, 0.94, 0.95, 0.96, 0.97, 0.98, 0.99, 1, 1.01, 1.02, 1.03, 1.04, 1.05, 1.06, 1.07, 1.08, 1.09, 1.1, and the like, and may alternatively be each independently selected from an interval formed by any two of the foregoing values. In some embodiments, the first active particles and the second active particles each independently satisfy any of the following ranges: 0.65 ≤ R_{Ni/Li} ≤ 1.1, 0.8 ≤ R_{Ni/Li} ≤ 1.0, 0.8 ≤ R_{Ni/Li} ≤ 0.95, 2/3 ≤ R_{Ni/Li} ≤ 8/9, 0.66 ≤ R_{Ni/Li} ≤ 0.89, 0.67 ≤ R_{Ni/Li} ≤ 0.88, 0.70 ≤ R_{Ni/Li} ≤ 1.07, 0.71 ≤ R_{Ni/Li} ≤ 1.06, R_{Ni/Li} ≥ 0.7, R_{Ni/Li} ≥ 0.8, R_{Ni/Li} ≥ 0.85, R_{Ni/Li} ≥ 0.9, or the like.

In some embodiments, the positive electrode active material according to the first aspect of this application further includes a doping element. Unless otherwise specified, the doping element in any positive electrode active material in this application (including, but not limited to, the positive electrode active material provided in the first aspect) may independently include one or more of a transition metal element and a non-transition metal element. An appropriate doping element and its content may be selected according to functional requirements. The doping element may include, but is not limited to, one or more of Sb, K, Ca, Zr, Sr, Al, B, Ba, Nb, W, Mo, Co, P, C, and the like. For the lithium-ion battery, the doping element may include, but is not limited to, one or more of Na, Sb, K, Ca, Zr, Sr, Al, B, Ba, Nb, W, Mo, Co, P, C, and the like.

In some embodiments, the first active particles and the second active particles are each independently a ternary material or a ternary material containing a doping and/or coating element.

The "ternary material" used in this application has a well-known meaning in the art of secondary batteries, and means that the positive electrode active material may include, in addition to the corresponding element of active ions (such as lithium element), nickel (Ni) element and cobalt (Co) element, and may further include an X element, where the X element may be, but is not limited to, manganese (Mn) element or aluminum (Al) element. When the X element is Mn element, the ternary material may be designated as an NCM ternary material, and a non-limiting example may include NCM₈₁₁ or the like. When the X element is Al element, the ternary material may be designated as an NCA ternary material, and a non-limiting example may include LiNi_{0.85}Co_{0.15}Al_{0.05}O₂ or the like.

In this application, unless otherwise specified, the "ternary material containing a doping and/or coating element" means a ternary material containing a doping element, a ternary material containing a coating element, or a ternary material containing both a doping element and a coating element.

In some embodiments, the first active particles and the second active particles are each independently an NCM ternary material, an NCA ternary material, an NCM ternary material containing a doping and/or coating element, or an NCA ternary material containing a doping and/or coating element.

In this application, unless otherwise specified, the " NCM ternary material containing a doping and/or coating element" means an NCM ternary material containing a doping element, an NCM ternary material containing a coating element, or an NCM ternary material containing both a doping element and a coating element. Unless otherwise specified, "an NCA ternary material containing a doping and/or coating element" means an NCA ternary material containing a doping element, an NCA ternary material containing a coating element, or an NCA ternary material containing both a doping element and a coating element.

In this application, when the positive electrode active material contains a coating element, it means that the positive electrode active material has a coating layer located on the outer side of a bulk structure, and the coating layer is composed of the coating element.

In some embodiments, the first active particles and the second active particles each independently have a chemical composition with the following molar element ratio: Liₓ(NiₐCo_{b}M_{c}M'_{d}) O₂, where 0.9 ≤ x ≤ 1.2, 0.8 ≤ a < 1, 0 < b < 1, 0 < c < 1, a + b + c + d = 1, M includes at least one of Mn and Al, and M' includes one or more of Na, K, Ca, Ba, Sb, Ti, Zr, W, Sr, Nb, Mo, Si, Mg, B, Cr, and Ta. In this case, the value of R_{Ni/Li} is equal to a/x. In some embodiments, R_{Ni/Li} is selected from (2/3) to (8/9). In some other embodiments, R_{Ni/Li} is selected from 0.67 to 0.88.

In some embodiments, the first active particles and the second active particles each independently include one or more of the following elements: Na, K, Ca, Ba, Sb, Ti, Zr, W, Sr, Nb, Mo, Si, Mg, B, Cr, and Ta. Contents of these elements may be flexibly adjusted according to the needs for improving the performance of the positive electrode active material, the positive electrode plate, or the secondary battery. For example, by doping the positive electrode active material with elements such as Mo, W, Zr, and Nb, crystal morphology can be controlled and interface performance between the electrolyte solution and the cathode material be can improved.

It should be noted that in chemical composition formulas of the first active particles and the second active particles, a molar equivalent of oxygen element is denoted as 2 for convenience, but there may be some non-integer cases. In addition, x in the foregoing composition formula may alternatively be a feeding molar equivalent in the manufacturing stage of the ternary positive electrode material. Generally, the positive electrode material in the battery available in the market has experienced a formation and aging process, and may have undergone a certain number of charge-discharge cycles. Therefore, as the charge and discharge process proceeds, the amount of Li in the positive electrode is sometimes lost. In this case, when the battery is discharged to a lower cut-off voltage of the battery, the lithium content x may be between 0.65 and 1.2 during the composition analysis.

In some embodiments, the number ratio R_{Ni/Li} of the nickel elements to the lithium elements in the first active particles is less than the number ratio R_{Ni/Li} of the nickel elements to the lithium elements in the second active particles. The number ratio R_{Ni/Li} of the nickel elements to the lithium elements in the first active particles is designated as R₁. The number ratio R_{Ni/Li} of the nickel elements to the lithium elements in the second active particles is designated as R₂.

In some embodiments, a difference ΔR_{Ni/Li} between the number ratios R_{Ni/Li} of nickel elements to lithium element in the second active particles and in the first active particles satisfies 0 < ΔR_{Ni/Li} ≤ 0.05. ΔR_{Ni/Li} = R₂ - R₁.

In some embodiments, non-limiting examples of ΔR_{Ni/Li} may include 0.01, 0.02, 0.03, 0.04, and 0.05, or an interval formed by any two of the foregoing values. For example, 0.01 ≤ ΔR_{Ni/Li} ≤ 0.05, 0.02 ≤ ΔR_{Ni/Li} ≤ 0.05, and 0.02 ≤ ΔR_{Ni/Li} ≤ 0.04.

By adjusting the relative magnitudes of the number ratios R_{Ni/Li} of the nickel elements to the lithium elements in the polycrystalline particles and in the monocrystalline or quasi-monocrystalline particles, R_{Ni/Li} of the polycrystalline particles is lower than R_{Ni/Li} of the monocrystalline or quasi-monocrystalline particle. This can not only provide a relatively high extractable capacity of the positive electrode active material, but also improve thermal stability of the positive electrode active material and improve the high-temperature storage performance of the battery.

In this application, any one of the positive electrode active particles (which may be, but is not limited to, the first active particles or the second active particles) includes at least a bulk structure of the positive electrode active particle, and may or may not further include a coating layer. When a coating layer is included, the coating layer is disposed on at least a partial surface of the bulk structure of the positive electrode active particles. By introducing a coating layer onto the positive electrode active particles, the side reactions at the cathode interface can be reduced.

In some embodiments, the first active particles include a bulk structure of the active particles and further include or do not include a coating layer.

In some embodiments, the second active particles include a bulk structure of the active particles and further include or do not include a coating layer.

In some embodiments, at least one of the first active particles and the second active particles includes a coating layer.

In some embodiments, the first active particles include a coating layer, and the compositions of the bulk structure of the first active particles and the coating layer may be the same or different.

In some embodiments, the second active particles include a coating layer, and the compositions of the bulk structure of the second active particles and the coating layer may be the same or different.

In some embodiments, the first active particles and the second active particles may each independently include a coating layer or do not include a coating layer.

When a coating layer is provided on the surface of the positive electrode active particles (which may be, but are not limited to, the first active particles or the second active particles), one or more of the foregoing doping elements may be used in the coating layer. For example, introduction of a metal oxide into the coating layer can improve the stability of the electrode/electrolyte solution interface. For another example, introduction of a fluoride into the coating layer can reduce the side reactions of the electrolyte solution, reduce the polarization, and improve the cycling stability of the positive electrode material at a high current and a high voltage. For another example, introduction of a lithiated compound into the coating layer can improve the structural stability of the positive electrode material. The thickness of the coating layer can be flexibly adjusted according to the needs for improving the performance of the positive electrode active particles, the positive electrode plate or the secondary battery. In some embodiments, the thickness of the coating layer is from 1 nm to 50 nm, and optionally from 1 nm to 10 nm. The thickness of the coating layer can be measured by using a morphology observation method such as transmission electron microscopy. The weight, composition, and content of each element of the coating layer can be measured by using an elemental analysis method such as inductively coupled plasma emission spectroscopy.

According to a second aspect, this application provides a positive electrode plate, including a positive electrode active material layer. The positive electrode active material layer includes the positive electrode active material according to the first aspect of this application. In this case, the use of the positive electrode plate can provide the secondary battery with excellent storage performance while maintaining a good energy density.

In some embodiments, a compaction density of the positive electrode plate is 3.2 g/cm³ to 3.8 g/cm³. The compaction density of the positive electrode plate may be selected from any one of the following densities: 3.2 g/cm³, 3.25 g/cm³, 3.3 g/cm³, 3.35 g/cm³, 3.4 g/cm³, 3.45 g/cm³, 3.5 g/cm³, 3.55 g/cm³, 3.6 g/cm³, 3.65 g/cm³, 3.7 g/cm³, 3.75 g/cm³, or 3.8 g/cm³, or may be selected from an interval formed by any two of the foregoing values. In some embodiments, the compaction density of the positive electrode plate is 3.4 g/cm³ to 3.7 g/cm³. When the compaction density of the positive electrode plate is in the foregoing range, a higher energy density can be obtained while both the energy density and the storage performance of the battery are ensured.

The "compaction density" used in this application has a well-known meaning in the art and is one of reference indicators for the energy density of a material. In this application, unless otherwise specified, the compaction density of the positive electrode plate refers to a ratio of the weight to the volume of the positive electrode active material layer.

The positive electrode plate includes a positive electrode current collector and a positive electrode film layer disposed on at least one surface of the positive electrode current collector. At least one positive electrode film layer includes a positive electrode active material layer, and any one of the positive electrode active material layers independently contains a positive electrode active material. At least one of the positive electrode active material layers contains the positive electrode active material according to the first aspect of this application.

As a non-limiting example, the positive electrode current collector has two opposite surfaces in its own thickness direction, and further the positive electrode film layer is arranged on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material substrate and a metal layer formed on at least one surface of the polymer material substrate. A metal material may be formed on a polymer material substrate to obtain the composite current collector. In the positive electrode current collector, non-limiting examples of the metal material may include one or more of aluminum, an aluminum alloy, nickel, a nickel alloy, titanium, a titanium alloy, silver, a silver alloy, and the like. In the positive electrode current collector, non-limiting examples of the polymer material substrate may include one or more of polypropylene (PP), polyethylene terephthalate (PET), polybutylene terephthalate (PBT), polystyrene (PS), polyethylene (PE), and other substrates.

In some embodiments, the positive electrode film layer further optionally includes a binder. Non-limiting examples of the binder may include one or more of polyvinylidene difluoride (PVDF), polytetrafluoroethylene (PTFE), a vinylidene difluoride-tetrafluoroethylene-propylene terpolymer, a vinylidene difluoride-hexafluoropropylene-tetrafluoroethylene terpolymer, a tetrafluoroethylene-hexafluoropropylene copolymer, and a fluorine-containing acrylate resin.

In some embodiments, the positive electrode film layer further optionally includes a conductive agent. Non-limiting examples of the conductive agent may include one or more of superconducting carbon, acetylene black, carbon black, Ketjen black, carbon dot, carbon nanotubes, graphene, and carbon nanofibers.

In some embodiments, the positive electrode plate may be prepared by dispersing the components for preparing the positive electrode plate, for example, the positive electrode active material, the conductive agent, the binder, and any other components in a solvent to form a positive electrode slurry; and applying the positive electrode slurry on at least one side surface of a positive electrode current collector, followed by oven drying, compaction (which may be cold pressing) and other procedures, to obtain the positive electrode plate. The solvent may be selected from, but is not limited to, any one listed in the foregoing embodiments, for example, N-methylpyrrolidone (NMP). The surface of the positive electrode current collector coated with the positive electrode slurry may be a single surface of the positive electrode current collector, or two surfaces of the positive electrode current collector.

According to a third aspect, this application provides a secondary battery, including a positive electrode plate according to the second aspect of this application, and further including a negative electrode plate and a separator, where the separator is disposed between the positive electrode plate and the negative electrode plate.

In the positive electrode plate of the secondary battery, the polycrystalline active particles and the monocrystalline or quasi-monocrystalline active particles have unique particle size distribution characteristics and excellent storage performance, and can also maintain a good energy density at the same time.

In this application, the secondary battery includes a positive electrode plate (the positive electrode plate provided in the second aspect of this application), a negative electrode plate, an electrolyte, and a separator. During the charging and discharging process of the battery, active ions are intercalated and deintercalated repeatedly between the positive electrode plate and the negative electrode plate. The electrolyte serves to conduct ions between the positive electrode plate and the negative electrode plate. The separator is provided between the positive electrode plate and the negative electrode plate, and mainly functions to prevent a short circuit between the positive electrode and the negative electrode while allowing active ions to pass through.

### Positive electrode plate

The positive electrode plate in the third and fourth aspects of this application includes the positive electrode plate provided in the second aspect of this application.

In some embodiments of this application, the secondary battery is a lithium-ion secondary battery. The lithium-ion secondary battery implements the charge and discharge processes by using the intercalation and deintercalation of lithium ions into and from the electrodes and the transmission in the electrolyte. Generally, the active ions in the lithium-ion secondary battery are, but not limited to, lithium ions.

### Negative electrode plate

The negative electrode plate includes a negative electrode current collector and a negative electrode film layer arranged on at least one surface of the negative electrode current collector. The negative electrode film layer includes a negative electrode active material.

In a non-limiting example, the negative electrode current collector has two opposite surfaces in its thickness direction, and the negative electrode film layer is provided on either one or both of the two opposite surfaces of the negative electrode current collector.

In some embodiments, the negative electrode current collector may be a metal foil or a composite current collector. For example, a copper foil may be used as the metal foil. The composite current collector may include a polymer material substrate and a metal layer formed on at least one surface of the polymer material substrate. A metal material may be formed on a polymer material substrate to obtain the composite current collector. In the negative electrode current collector, non-limiting examples of the metal material may include one or more of copper, a copper alloy, nickel, a nickel alloy, titanium, a titanium alloy, silver, a silver alloy, and the like. In the negative electrode current collector, non-limiting examples of the polymer material substrate may include one or more of polypropylene (PP), polyethylene terephthalate (PET), polybutylene terephthalate (PBT), polystyrene (PS), polyethylene (PE), and other substrates.

In some embodiments, the negative electrode active material may be a negative electrode active material for batteries known in the art. Non-limiting examples of the negative electrode active material may include one or more of artificial graphite, natural graphite, soft carbon, hard carbon, silicon-based materials, tin-based materials, lithium titanate, and the like. The silicon-based material may be selected from elemental silicon, silicon oxide, silicon-carbon composite, silicon-nitrogen composite, and silicon alloy. The tin-based material may include one or more of elemental tin, a tin oxide and a tin alloy. However, it is not limited to these materials in this application, and other conventional materials useful as negative electrode active materials for batteries may alternatively be used. These negative electrode active materials may be used alone or in combination of two or more thereof.

In some embodiments, the negative electrode film layer further optionally includes a binder. The binder may include one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may include one or more of superconducting carbon, acetylene black, carbon black, Ketjen black, carbon dot, carbon nanotubes, graphene, and carbon nanofibers.

In some embodiments, the negative electrode film layer may further optionally include other additives, for example, a thickener. A non-limiting example of the thickener may include sodium carboxymethyl cellulose (CMC-Na) or the like.

In some embodiments, the negative electrode plate may be prepared by dispersing the components for preparing the negative electrode plate, for example, the negative electrode active material, the conductive agent, the binder, and any other components, in a solvent (a non-limiting example of the solvent is deionized water) to form a negative electrode slurry; and applying the negative electrode slurry on at least one side surface of a negative electrode current collector (the surface coated with the negative electrode slurry may be a single surface, or two surfaces), followed by oven drying, compaction (which may be performed by cold pressing), and other procedures, to obtain the negative electrode plate.

### Electrolyte

The electrolyte serves to conduct ions between the positive electrode plate and the negative electrode plate. The type of the electrolyte is not particularly limited in this application, and may be selected according to requirements. For example, the electrolyte may be in a liquid, gel, or full solid state.

In some embodiments, an electrolyte solution is used as the electrolyte. The electrolyte solution includes an electrolyte salt and a solvent. In the lithium-ion secondary battery, the electrolyte salt may include an electrolyte lithium salt.

In some embodiments, the electrolyte lithium salt includes one or more of lithium hexafluorophosphate (LiPF₆), lithium tetrafluoroborate (LiBF₄), lithium perchlorate (LiClO₄), lithium hexafluoroarsenate, lithium bis(fluorosulfonyl)imide (LiFSI), lithium bis(trifluoromethanesulfonyl)imide (LiTFSI), lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent is an organic solvent.

In some embodiments, the organic solvent is an ester or an ether. In some embodiments, the organic solvent is an ester. The ester solvent may include one or more of a carbonate and a halogenated carbonate. Non-limiting examples include, for example, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), and a fluorinated product of any of the foregoing materials.

In some embodiments, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally includes an additive. For example, the additive may include a negative electrode film-forming additive, a positive electrode film-forming additive, and also include additives that can improve certain battery performances, such as an additive that improves overcharge performance of the battery and an additive that improves high-temperature or low-temperature performance of the battery.

In some embodiments, the additive may include one or more of vinylene carbonate (VC), vinyl ethylene carbonate (VEC), fluoroethylene carbonate (FEC), difluoroethylene carbonate (DFEC), trifluoromethyl ethylene carbonate (TFPC), methylene methanedisulfonate (MMDS), 1-propylene-1,3-sultone (PST), ethylene sulfite (ES), propylene sulfite (PS), ethylene sulfate (DTD), succinonitrile (SN), adiponitrile (AND), sulfonate cyclic quaternary ammonium salt, tris(trimethylsilyl) phosphate (TMSP), tris(trimethylsilyl) borate (TMSB), and anisole.

### Separator

In some embodiments, the secondary battery further includes a separator. The type of the separator is not particularly limited in this application, and any well-known separator with a porous structure having good chemical stability and mechanical stability may be selected.

In some embodiments, the material of the separator may include one or more of glass fiber, non-woven cloth, polyethylene, polypropylene, and polyvinylidene fluoride. The separator may be a single-layer film or a multi-layer composite film, which is not particularly limited. When the separator is a multi-layer composite film, materials of layers may be the same or different, which is not particularly limited.

### Electrode assembly, electrochemical energy storage device, secondary battery, and electrical device

In some embodiments, the positive electrode plate, the negative electrode plate, and the separator may be made into an electrode assembly through a winding process or a lamination process.

In some embodiments, the electrochemical energy storage device may include an outer package. The outer package may be used to encapsulate the foregoing electrode assembly and electrolyte.

In some embodiments, the secondary battery may include an outer package. The outer package may be used to encapsulate the foregoing electrode assembly and electrolyte.

In some embodiments, the outer package of the secondary battery may be a hard case, such as a hard plastic case, an aluminum case, a steel case, or the like. The outer package of the secondary battery may alternatively be a soft pack, such as a bag-type soft pack. The material of the soft pack may be plastic, and further, a non-limiting example of the plastic may include one or more of polypropylene, polybutylene terephthalate, polybutylene succinate, and the like.

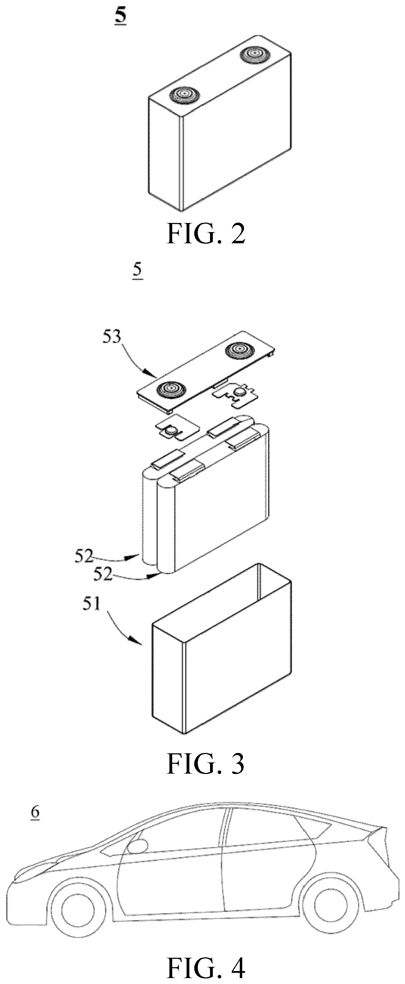

The shape of the secondary battery is not particularly limited in this application, and it may be cylindrical, square, or any other shape. For example, Fig. 2 shows an example of a secondary battery 5 having a square structure.

In some embodiments, referring to Fig. 3, the outer package may include a case 51 and a cover plate 53. Here, the housing 51 can include a bottom plate and a side plate connected to the bottom plate, where the bottom plate and the side plate define an accommodating cavity. The case 51 has an opening that communicates with the accommodating cavity, and the cover plate 53 can cover the opening to close the accommodating cavity. The positive electrode plate, the negative electrode plate, and the separator may be wound or stacked to form an electrode assembly 52. The electrode assembly 52 is encapsulated within the accommodating cavity. The electrolyte solution impregnates the electrode assembly 52. The number of electrode assemblies 52 included in the secondary battery 5 may be one or more, which can be selected by those skilled in the art according to actual requirements.

According to a fourth aspect, this application provides a power consuming apparatus including at least one of the positive electrode plate according to the second aspect of this application and the secondary battery according to the third aspect of this application.

The secondary battery can be used as a power source for the power consuming apparatus, and can also be used as an energy storage unit for the power consuming apparatus. The power consuming apparatus may include, but is not limited to, a mobile device, an electric vehicle, an electric train, a ship, a satellite, an energy storage system, or the like. The mobile device may be, for example, a mobile may phone or a laptop; and the electric vehicle may be, for example, but is not limited to, an all-electric vehicle, a hybrid electric vehicle, a plug-in hybrid electric vehicle, an electric bicycle, an electric scooter, an electric golf cart, or an electric truck.

For the power consuming apparatus, the secondary battery may be selected according to the requirements during use.

FIG. 4 shows an example of a power consuming apparatus 6. The power consuming apparatus is an electric vehicle, a hybrid electric vehicle, a plug-in hybrid electric vehicle, or the like. In order to meet the requirements of the power consuming apparatus for high power and high energy density of secondary batteries, a battery pack or a battery module may be used.

In another example, the apparatus may be a mobile phone, a tablet computer, or a laptop. The device is generally required to be light and thin, and can use a secondary battery as a power source.

According to a fifth aspect, this application provides a method for preparing a positive electrode active material, which may be used to prepare the positive electrode active material according to the first aspect of this application.

In some embodiments, a method for preparing a positive electrode active material is provided, which includes the following steps:
preparing first active particles and second active particles separately; and
mixing the first active particles and the second active particles to prepare the positive electrode active material according to the first aspect of this application.

In some embodiments, the first active particles are prepared by using a method including the following steps: sintering a precursor material having a specified stoichiometric ratio of elements at a sintering temperature of 600°C to 900°C. Further, the sintering duration may be 8 h to 15 h, for example, any duration such as 8 h, 9 h, 10 h, 11 h, 12 h, 13 h, 14 h, or 15 h, or may be selected from an interval formed by any two of the foregoing durations. The sintering temperature for preparing the first active particles (polycrystalline particles) may be 600°C to 900°C, or may be selected from any one of the following temperatures: 600°C, 650°C, 700°C, 750°C, 800°C, 850°C, or 900°C, or may be selected from a temperature interval formed by any two of the foregoing temperatures, for example, 750°C to 850°C.

In some embodiments, the second active particles are prepared by a method including the following steps: sintering a precursor material having a specified stoichiometric ratio of elements at a sintering temperature of 700°C to 1000°C. Further, the sintering duration may be 8 h to 15 h, for example, any duration such as 8 h, 9 h, 10 h, 11 h, 12 h, 13 h, 14 h, or 15 h, or may be selected from an interval formed by any two of the foregoing durations. The sintering temperature for preparing the second active particles (monocrystalline or quasi-monocrystalline particles) may be 700°C to 1000°C, or may be selected from any one of the following temperatures: 700°C, 750°C, 800°C, 850°C, 900°C, 950°C, or 1000°C, or may be selected from a temperature interval formed by any two of the foregoing temperatures, for example, 650°C to 800°C.

For a person skilled in the art, the composition design based on the composition and content of the target element in the positive electrode active particles may be directly adjusted on the basis of the conventional method for preparing the active particle precursor in the art, so as to regulate the compositions of the precursor and the active particles prepared therefrom. In addition, by adjusting the composition of each element in the precursor solution in combination with controlling the sintering temperature, the size of the active particles can be controlled to some extent. For example, particle size distribution parameters such as Dᵥ90, Dᵥ50, and Dᵥ10 can be regulated.

By controlling the sintering parameters of the positive electrode active material, the unique particle size distribution characteristics of the polycrystalline active particles and the monocrystalline or quasi-monocrystalline active particles can be adjusted.

When the positive electrode active particles are provided with a coating layer on at least a partial surface of a bulk structure of the active particles, the positive electrode active particles with a coating layer may be prepared by using a step-by-step sintering method. The bulk precursor material may be sintered for a first time to obtain the bulk structure of the positive electrode active particles, and then a precursor material for the coating layer is coated on at least a partial surface of the bulk structure, and then sintered for a second time to obtain the positive electrode active particles with the coating layer. For a person skilled in the art, the positive electrode active particles with the target structure can be easily obtained or screened out by adjusting the preparation parameters.

According to a sixth aspect, this application provides a method for preparing a positive electrode slurry, including the following steps: mixing the positive electrode active material in the first aspect of this application with a solvent to obtain a positive electrode slurry, where an additive is added or not added to the positive electrode slurry.

The first active particles may be prepared by using the method described in the fifth aspect of this application.

The second active particles may be prepared by using the method described in the fifth aspect of this application.

The additive includes one or more of a conductive agent and a binder.

Some examples of this application are described below. The examples described below are exemplary and only used to explain this application, and should not be construed as a limitation on this application. Where techniques or conditions are not indicated in the examples, the techniques or conditions described above or in the literatures in the art or described in the product specifications are followed. The reagents or instruments for which no manufacturers are noted are all commercially available common products, or can be conventionally synthesized with commercially available products.

### Method for preparing positive electrode active material

### 1. Preparation of first active particles (polycrystalline active particles)

At 50°C to 55°C, nickel sulfate, manganese sulfate, and cobalt sulfate are prepared into a 1 mol/L solution at a molar ratio, in which the solvent is deionized water. A hydroxide such as aqueous ammonia and sodium hydroxide is added for co-precipitation, to obtain a polycrystalline precursor. Whether the polycrystalline precursor meets the preset requirements is determined through particle size test. In the process of preparing the polycrystalline precursor, reaction time, a pH value during co-precipitation, and an ammonia concentration may be controlled to control the particle size of the precursor particles.

The polycrystalline precursor Ni_{0.9}Co_{0.02}Mn_{0.08}(OH)₂ and LiOH·H₂ are mixed at an appropriate molar ratio (1:1.08) and then sintered in an atmosphere furnace at 650°C to 800°C (800°C in this example). The sintering duration is 8 h to 15 h, and the gas atmosphere is oxygen. After cooling, polycrystalline active particles, that is, the first active particles, can be obtained through mechanical grinding.

### 2. Preparation of second active particles (monocrystalline active particles in this example)

At 50°C to 55°C, nickel sulfate, manganese sulfate, and cobalt sulfate are prepared into a 1 mol/L solution at a molar ratio, in which the solvent is deionized water. A hydroxide such as aqueous ammonia and sodium hydroxide is added for co-precipitation, to obtain a monocrystalline precursor. Whether the monocrystalline precursor meets the preset requirements is determined through particle size test. In the process of preparing the monocrystalline precursor, reaction time, a pH value during co-precipitation, an ammonia concentration, and other parameters may be controlled to control the particle size of the monocrystalline precursor particles.

The monocrystalline precursor Ni_{0.9}Co_{0.02}Mn_{0.08}(OH)₂ and LiOH·H₂ are mixed at an appropriate molar ratio and then sintered in an atmosphere furnace at 750°C to 850°C (850°C in this example). The sintering duration is 8 h to 15 h, and the gas atmosphere is oxygen. After cooling, monocrystalline active particles, that is, the second active particles, can be obtained through mechanical grinding.

After sintering, the particle size of the active particles converted from the precursor particles is slightly increased. Therefore, the preset particle size of the precursor is appropriately smaller than the particle size of the corresponding active particles after sintering.

When a coating layer is provided on at least partial surfaces of the polycrystalline active particles or monocrystalline active particles, the precursor material may be sintered in a first stage to obtain a bulk structure of the positive electrode active particles. Then the bulk structure is mixed with a raw material of the coating layer uniformly. A second stage of sintering is performed under a suitable gas atmosphere to form a coating layer on at least a partial surface of the bulk structure of the active particles.

### 3. Preparation of positive electrode active material

The polycrystalline active particles (first active particles) and the monocrystalline active particles (second active particles) prepared above are mixed at a certain weight ratio to obtain the positive electrode active material.

In Example 1 below, Dᵥ50 of the polycrystalline particles is 9 µm, and (Dᵥ90-Dᵥ10)/Dᵥ50 of the polycrystalline particles is 0.4; and Dᵥ50 of the monocrystalline particles is 3.3 µm, and (Dᵥ90-Dᵥ10)/Dᵥ50 of the monocrystalline particles is 1.6. That is, X1/X2 may be calculated to be 0.25. Still refer to Table 1.

### Test and analysis method

### 1. Test and analysis of particle size

### (1) Particle size test

Sample preparation: the prepared positive electrode active material or a positive electrode active material obtained through sampling from the positive electrode active material layer of the positive electrode plate. To avoid the influence of agglomeration during the drying process on the particle size test, a wet sample after washing was taken for dispersion test.
Particle size: Dᵥ10, Dᵥ50, and Dᵥ90.
Equipment model: MasterSizer 2000 laser particle size analyzer, reference standard procedure: GB/T 19077-2016/ISO 13320:2009.
Test process: An appropriate amount of the test sample (the sample concentration ensures a shading rate of 8% to 12%) is added to 20 mL of absolute ethanol, and sonicated for 5 min (53 kHz/120 W) to ensure that the sample is completely dispersed. Then the sample is tested according to the standard GB/T 19077-2016/ISO 13320:2009.

### (2) X1/X2

According to the foregoing descriptions, in this application, the polycrystalline active particles in the positive electrode active material are designated as the first active particles, and the monocrystalline or quasi-monocrystalline active particles in the positive electrode active material are designated as the second active particles. The particle size parameter (Dᵥ90-Dᵥ10)/Dᵥ50 of the first active particles is designated as X1, and the particle size parameter (Dᵥ90-Dᵥ10)/Dᵥ50 of the second active particles is designated as X2.

### 2. Method for testing compaction density of electrode plate

The electrode plate is cut into a slice with a length of 1000 mm. The positive electrode plate is rolled under an appropriate pressure. Due to the ductility of the aluminum foil, the slice length reaches 1006 mm (having an elongation rate of 0.6%). A small disc of 1540.25 mm² (the area is designated as A) is punched, and the weight W and thickness d of the small disc are measured. Conversion is performed according to the weight of a certain volume of positive electrode current collector. The weight W1 and thickness d1 of the positive electrode current collector in the small disc are subtracted to obtain the weight W2 and thickness d2 of the positive electrode active material layer. The compaction density of the electrode plate is calculated according to the ratio W2/(A-d2).

The test results are shown in Table 3.

### 3. Performance of battery core or battery

### (1) Method for testing battery capacity

The lithium-ion battery is allowed to stand at a constant temperature of 25°C for 2 h, charged to 4.2 V at 0.33 C in the range of 2.8 V to 4.2 V, and then charged to a current of ≤ 0.05 C at a constant voltage of 4.2 V. After standing for 10 min, the battery is then discharged to 2.8 V at 0.33 C. The initial capacity C0 of the lithium-ion battery is recorded.

The test results are shown in Table 3.

### (2) Method for testing high-temperature storage performance of battery

The battery is left standing in a constant-temperature incubator at 60°C for 100 days, then discharged to 2.8 V at 0.33 C again at 25°C, and left standing for 10 min. The battery is charged to 4.2 V at 0.33 C, and then charged to a current of ≤ 0.05 C at a constant voltage of 4.2 V. After standing for 10 min, the battery is then discharged to 2.8 V at 0.33 C. The capacity C1 of the lithium-ion battery is recorded. Capacity retention rate of the battery (%) = C1/CO × 100%.

The test results are shown in Table 3.

### Example 1:

### 1. Preparation of positive electrode active material

According to the preparation parameters shown in Table 1 and Table 2, the first active particles and the second active particles were sequentially prepared by the method for preparing the positive electrode active material as described above.

The first active particles and the second active particles were mixed to prepare a positive electrode active material of this example.

### 2. Preparation of positive electrode plate

The positive electrode active material, the conductive agent acetylene black, and the binder polyvinylidene fluoride (PVDF) were uniformly mixed at a weight ratio of 97:2:1, and then added to the solvent N-methylpyrrolidone (NMP) to prepare a positive electrode slurry. The positive electrode slurry was uniformly coated on two side surfaces of an aluminum foil as a positive electrode current collector, dried at 85°C and then cold pressed, followed by die cutting and slicing, to obtain a positive electrode plate for a lithium-ion battery.

### 3. Preparation of negative electrode plate

The negative electrode active material graphite, silicon oxide, the conductive agent acetylene black, the thickener sodium hydroxymethyl cellulose (CMC-Na), and the binder styrene-butadiene rubber (SBR) were added to the solvent water at a weight ratio of 72 24:2:1:1 and mixed uniformly to prepare a negative electrode slurry. The negative electrode slurry was uniformly coated on two side surfaces of a copper foil as a negative electrode current collector, dried at 85°C and then cold pressed, to obtain a negative electrode plate for a lithium-ion battery.

### 4. Preparation of separator

A polyethylene microporous film was used as a substrate of a porous separator. Inorganic alumina powder, polyvinylpyrrolidone, and the solvent acetone were uniformly mixed at a weight ratio of 3:1.5:5.5 to prepare a slurry. The slurry was coated on one side surface of the substrate and dried to obtain a separator.

### 5. Preparation of electrolyte solution

Lithium hexafluorophosphate was dissolved in a mixed solvent of ethylene carbonate, dimethyl carbonate, and methyl ethyl carbonate (where the volume ratio of ethylene carbonate, dimethyl carbonate, and methyl ethyl carbonate was 1:2:1) to obtain an electrolyte solution for a lithium-ion battery.

### 6. Preparation of battery

The positive electrode plate, the negative electrode plate and the separator were wound to obtain a bare battery core, followed by packaging, electrolyte injection, formation, venting and other procedures to obtain a secondary battery of Example 1, which was a lithium-ion battery.

**Example 2 to Example 10:** The preparation methods of the first active particles, the second active particles, the positive electrode active material, the positive electrode plate, and the secondary battery were basically the same as those in Example 1. The chemical composition, particle size and distribution of the active particles, and the content of the active particles could be controlled with reference to Table 1 and Table 2, allowing the preparation parameters of the active particles to be appropriately adjusted according to the parameters in Table 1.

**Comparative Example 1 and Comparative Example 2:** The preparation methods of the first active particles, the second active particles, the positive electrode active material, the positive electrode plate, and the secondary battery were basically the same as those in Example 1. The chemical composition, particle size and distribution of the active particles, and the content of the active particles could be controlled with reference to Table 1 and Table 2, allowing the preparation parameters of the active particles to be appropriately adjusted according to the parameters in Table 1.

**Table 1**

| No. | Chemical composition of first active particles (polycrystalline) | Chemical composition of second active particles (monocrystalline or quasi-monocrystalline) |
|---|---|---|
| Example 1 | LiNi_{0.9}Co_{0.02}Mn_{0.08}O₂ | LiNi_{0.9}CO_{0.02}Mn_{0.08}O₂ |
| Example 2 | LiNi_{0.9}Co_{0.02}Mn_{0.08}O₂ | LiNi_{0.9}CO_{0.02}Mn_{0.08}O₂ |
| Example 3 | LiNi_{0.9}Co_{0.02}Mn_{0.08}O₂ | LiNi_{0.9}CO_{0.02}Mn_{0.08}O₂ |
| Example 4 | LiNi_{0.9}Co_{0.02}Mn_{0.08}O₂ | LiNi_{0.9}CO_{0.02}Mn_{0.08}O₂ |
| Example 5 | LiNi_{0.9}Co_{0.02}Mn_{0.08}O₂ | LiNi_{0.9}CO_{0.02}Mn_{0.08}O₂ |
| Example 6 | LiNi_{0.9}Co_{0.02}Mn_{0.08}O₂ | LiNi_{0.9}CO_{0.02}Mn_{0.08}O₂ |
| Example 7 | LiNi_{0.9}Co_{0.02}Mn_{0.08}O₂ | LiNi_{0.9}CO_{0.02}Mn_{0.08}O₂ |
| Example 8 | LiNi_{0.9}Co_{0.02}Mn_{0.08}O₂ | LiNi_{0.9}CO_{0.02}Mn_{0.08}O₂ |
| Example 9 | LiNi_{0.9}Co_{0.02}Mn_{0.08}O₂ | LiNi_{0.9}CO_{0.02}Mn_{0.08}O₂ |
| Example 10 | LiNi_{0.89}Co_{0.02}Mn_{0.09}O₂ | LiNi_{0.92}Co_{0.02}Mn_{0.06}O₂ |
| Comparative Example 1 | LiNi_{0.9}Co_{0.02}Mn_{0.08}O₂ | LiNi_{0.9}CO_{0.02}Mn_{0.08}O₂ |
| Comparative Example 2 | LiNi_{0.9}CO_{0.02}Mn_{0.08}O₂ | LiNi_{0.9}CO_{0.02}Mn_{0.08}O₂ |

**Table 2**

| No. | First active particles (polycrystalline) | | Second active particles (monocrystalline or quasi-monocrystalline) | | R_{Dv50} | Rw | X1/X2 |
|---|---|---|---|---|---|---|---|
| | Dᵥ50 (µm) | X1 | Dᵥ50 (µm) | X2 | | | |
| Example 1 | 9.0 | 0.40 | 3.3 | 1.60 | 2.7 | 0.7 | 0.25 |
| Example 2 | 9.2 | 0.30 | 4.2 | 1.50 | 2.2 | 0.7 | 0.20 |
| Example 3 | 9.2 | 0.30 | 4.9 | 0.81 | 1.9 | 0.7 | 0.37 |
| Example 4 | 9.0 | 0.40 | 4.5 | 0.72 | 2.0 | 0.7 | 0.55 |
| Example 5 | 9.5 | 0.48 | 4.5 | 0.72 | 2.1 | 0.7 | 0.67 |
| Example 6 | 9.2 | 0.30 | 4.9 | 0.81 | 1.9 | 0.5 | 0.37 |
| Example 7 | 9.2 | 0.30 | 4.9 | 0.81 | 1.9 | 0.8 | 0.37 |
| Example 8 | 9.2 | 0.30 | 4.9 | 0.81 | 1.9 | 0.9 | 0.37 |
| Example 9 | 12.9 | 0.70 | 3.3 | 1.60 | 3.9 | 0.7 | 0.44 |
| Example 10 | 9.2 | 0.30 | 4.9 | 0.81 | 1.9 | 0.7 | 0.37 |
| Comparative Example 1 | 9.2 | 2.0 | 3.0 | 1.52 | 3.1 | 0.7 | 1.32 |
| Comparative Example 2 | 9.1 | 0.25 | 3.0 | 1.52 | 3.0 | 0.7 | 0.16 |

In Table 2:
(1) R_{W} is a percentage of the weight of the first active particles relative to the total weight of the first active particles and the second active particles;
(2) R_{Dv50} is the ratio of Dᵥ50 of the first active particles and the second active particles; and
(3) X1 is (Dᵥ90-Dᵥ10)/Dᵥ50 of the first active particles; and X2 is (Dᵥ90-Dᵥ10)/Dᵥ50 of the second active particles.

### Test results and analysis

The parameters and performance test results of the examples and comparative examples are shown in Table 3.

Example 1 to Example 10 show excellent high-temperature storage performance, with a capacity retention rate being higher than 93% after 100 days of storage at 60°C, have a long high-temperature storage life, and can maintain both good compaction density and good battery capacity, also meaning that a good energy density.

X1/X2 in Comparative Example 1 is too high and X1/X2 in Comparative Example 2 is too low, causing the high-temperature storage performance, the compaction density, and the initial capacity not able to be achieved at the same time, that is, the requirements for the storage life and the energy density of the battery cannot be met at the same time. The high-temperature storage performance in Comparative Example 1 deteriorates. The high-temperature storage performance in Comparative Example 2 is improved at the cost of severe loss of the energy density, and the compaction density decreases severely.

**Table 3**

| No. | Compaction density (g/cm³) | Initial capacity C0 (Ah) | Capacity retention rate after 100 days of storage at 60°C |
|---|---|---|---|
| Example 1 | 3.61 | 53.2 | 93.9% |
| Example 2 | 3.55 | 52.9 | 94.1% |
| Example 3 | 3.45 | 52.4 | 94.2% |
| Example 4 | 3.55 | 52.9 | 94.0% |
| Example 5 | 3.42 | 52.1 | 93.4% |
| Example 6 | 3.55 | 52.9 | 94.5% |
| Example 7 | 3.43 | 52.0 | 94.1% |
| Example 8 | 3.35 | 51.6 | 94.0% |
| Example 9 | 3.65 | 53.6 | 93.7% |
| Example 10 | 3.45 | 52.6 | 94.4% |
| Comparative Example 1 | 3.65 | 53.4 | 92.0% |
| Comparative Example 2 | 3.31 | 51.6 | 94.5% |

The technical features of the foregoing embodiments may be arbitrarily combined. For the sake of brevity of description, not all possible combinations of the technical features in the foregoing embodiments are described. However, where no contradiction exists, all the combinations of these technical features are contemplated in the scope of this application.

It should be noted that this application is not limited to the embodiments above. The foregoing embodiments are merely exemplary, and embodiments having substantially the same technical idea and the same effects within the scope of the technical solution of this application are all included in the technical scope of this application. The foregoing embodiments are only several implementations of this application, which are described in detail, without limitation to the scope claimed by this application. In addition, other embodiments constructed by applying various modifications conceivable to those skilled in the art to the embodiments and combining some of the constituent elements of the embodiments without departing from the scope of the essence of this application are also included in the scope of this application. It is to be understood that for a person of ordinary skill in the art, several variations and improvements can be made without departing from the idea of this application, which are all contemplated in the protection scope of this application. Therefore, the scope of protection of this application shall be subject to the appended claims, and the description and drawings can be used to interpret the content of the claims.

## Claims

1. A positive electrode active material, comprising first active particles and second active particles, wherein the first active particles are polycrystalline particles in the positive electrode active material, and have a particle size parameter (Dᵥ90-Dᵥ10)/Dᵥ50 designated as X1; and the second active particles are monocrystalline or quasi-monocrystalline particles in the positive electrode active material, and have a particle size parameter (Dᵥ90-Dᵥ10)/Dᵥ50 designated as X2; and
X1/X2 satisfies 0.2 ≤ X1/X2 ≤ 0.7,
wherein Dᵥ90, Dᵥ50, and Dᵥ10 respectively represent corresponding particle sizes when a cumulative volume distribution percentage of combined multi-particles reaches 90%, 50%, and 10%.

2. The positive electrode active material according to claim 1, wherein in a particle size distribution curve of the positive electrode active material, the first active particles and the second active particles correspond to two discrete separate peaks respectively.

3. The positive electrode active material according to claim 1 or 2, wherein X1/X2 satisfies 0.25 ≤ X1/X2 ≤ 0.55.

4. The positive electrode active material according to any one of claims 1 to 3, wherein the first active particles satisfy a condition that 0.3 ≤ X1 ≤ 1.0; and
optionally, the first active particles satisfy a condition that 0.4 ≤ X1 ≤ 0.8.

5. The positive electrode active material according to any one of claims 1 to 4, wherein the second active particles satisfy a condition that 0.7 ≤ X2 ≤ 2.5;
optionally, the second active particles satisfy a condition that 0.7 ≤ X2 ≤ 2; and
further optionally, the second active particles satisfy a condition that 0.8 ≤ X2 ≤ 1.6.

6. The positive electrode active material according to any one of claims 1 to 5, wherein a ratio R_{Dv50} of Dᵥ50 of the first active particles to Dᵥ50 of the second active particles satisfies 2 ≤ R_{Dv50} ≤ 4; and
optionally, the ratio R_{Dv50} of Dᵥ50 of the first active particles to Dᵥ50 of the second active particles satisfies 2.3 ≤ R_{Dv50} ≤ 4.0.

7. The positive electrode active material according to any one of claims 1 to 6, wherein Dᵥ50 of the first active particles satisfies 7 µm ≤ Dᵥ50 ≤ 15 µm; and
optionally, Dᵥ50 of the first active particles satisfies 7 µm ≤ Dᵥ50 ≤ 14 µm.

8. The positive electrode active material according to any one of claims 1 to 7, wherein Dᵥ50 of the second active particles satisfies 1 µm ≤ Dᵥ50 ≤ 6 µm; and
optionally, Dᵥ50 of the second active particles satisfies 2 µm ≤ Dᵥ50 ≤ 4 µm.

9. The positive electrode active material according to any one of claims 1 to 8, wherein a ratio R_{W} of a weight of the first active particles to a total weight of the first active particles and the second active particles satisfies 0.5 ≤ R_{W} ≤ 0.9; and
optionally, the ratio R_{W} of the weight of the first active particles to the total weight of the first active particles and the second active particles satisfies 0.7 ≤ R_{W} ≤ 0.9.

10. The positive electrode active material according to any one of claims 1 to 9, wherein the first active particles and the second active particles are each independently an oxide material containing lithium elements and nickel elements;
optionally, a number ratio R_{Ni/Li} of nickel elements to lithium elements in the first active particles and a number ratio R_{Ni/Li} of nickel elements to lithium elements in the second active particles are each independently greater than or equal to 0.65; and
further optionally, the number ratio R_{Ni/Li} of the nickel elements to the lithium elements in the first active particles and the number ratio R_{Ni/Li} of the nickel elements to the lithium elements in the second active particles each independently satisfy 0.8 ≤ R_{Ni/Li} ≤ 1.0.

11. The positive electrode active material according to any one of claims 1 to 10, wherein the first active particles and the second active particles are each independently a ternary material or a ternary material containing a doping and/or coating element;
optionally, the first active particles and the second active particles are each independently an NCM ternary material, an NCA ternary material, an NCM ternary material containing a doping and/or coating element, or an NCA ternary material containing a doping and/or coating element; and
optionally, the first active particles and the second active particles each independently comprise an element combination of: Liₓ(NiₐCo_{b}M_{c}M'_{d})O₂, wherein 0.9 ≤ x ≤ 1.2, 0.8 ≤ a < 1, 0 < b < 1, 0 < c < 1, a + b + c + d = 1, M comprises at least one of Mn and Al, and M' comprises one or more of Na, K, Ca, Ba, Sb, Ti, Zr, W, Sr, Nb, Mo, Si, Mg, B, Cr, and Ta.

12. The positive electrode active material according to claim 10 or 11, wherein the number ratio R_{Ni/Li} of the nickel elements to the lithium elements in the first active particles is less than the number ratio R_{Ni/Li} of the nickel elements to the lithium elements in the second active particles;
optionally, a difference ΔR_{Ni/Li} between the number ratios R_{Ni/Li} of the nickel elements to the lithium elements in the second active particles and in the first active particles satisfies 0 < ΔR_{Ni/Li} ≤ 0.05; and
further optionally, 0.01 < ΔR_{Ni/Li} ≤ 0.05.

13. A positive electrode plate, comprising a positive electrode active material layer, the positive electrode active material layer comprising the positive electrode active material according to any one of claims 1 to 14.

14. The positive electrode plate according to claim 13, wherein compaction density of the positive electrode plate ranges from 3.2 g/cm³ to 3.8 g/cm³; and
optionally, the compaction density of the positive electrode plate ranges from 3.4 g/cm³ to 3.7 g/cm³.

15. A secondary battery, comprising the positive electrode plate according to claim 13 or 4, and further comprising a negative electrode plate and a separator, wherein the separator is disposed between the positive electrode plate and the negative electrode plate.

16. A power consuming apparatus, comprising at least one of the positive electrode plate according to claim 13 or 14 and the secondary battery according to claim 15.

17. A method for preparing a positive electrode active material, comprising the following steps:
preparing first active particles and second active particles separately; and
mixing the first active particles and the second active particles to prepare the positive electrode active material according to any one of claims 1 to 12,
wherein the first active particles are prepared by using a method comprising the following steps: sintering a precursor material having a specified stoichiometric ratio of elements at a temperature of 600°C to 900°C for 8 h to 15 h; and
the second active particles are prepared by using a method comprising the following steps: sintering a precursor material having a specified stoichiometric ratio of elements at a temperature of 700°C to 1000°C for 8 h to 15 h.
